## Europäisches Patentamt

## European Patent Office

## Office européen des brevets

(19)

(11) Veröffentlichungsnummer: **0 123 205**
**B1**

(12) **EUROPÄISCHE PATENTSCHRIFT**

(45) Veröffentlichungstag der Patentschrift:
**20.11.86**

(51) Int. Cl.⁴: **G 09 B 21/00**

(21) Anmeldenummer: **84104025.6**

(22) Anmeldetag: **11.04.84**

(54) Verfahren und Vorrichtung zum Darstellen von grafischer Information, insbesondere von Blindenschrift-Texten.

(30) Priorität: **22.04.83 DE 3314645**

(43) Veröffentlichungstag der Anmeldung:
**31.10.84 Patentblatt 84/44**

(45) Bekanntmachung des Hinweises auf die Patenterteilung:
**20.11.86 Patentblatt 86/47**

(84) Benannte Vertragsstaaten:
**AT BE CH DE FR GB IT LI LU NL SE**

(56) Entgegenhaltungen:
**US - A - 3 736 672**

**IBM TECHNICAL DISCLOSURE BULLETIN, Band 18, Nr. 7, Dezember 1975, Seiten 2294-2295, New York, USA E.G. NASSIMBENE: "Ball and belt loop braille line display"**
**Idem**

(73) Patentinhaber: **Meinzer, Karin, An den Brunnenröhren 21, D-3550 Marburg/Lahn 1 (DE)**

(72) Erfinder: **Meinzer, Karl, Dr., An den Brunnenröhren 21, D-3550 Marburg/Lahn 1 (DE)**

(74) Vertreter: **Olbricht, Karl Heinrich, Dipl.-Phys., Am Weinberg 15, D-3556 Niederweimar (DE)**

**Beschreibung**

Die Erfindung betrifft ein Verfahren gemäss dem Oberbegriff des Anspruchs 1 sowie eine Vorrichtung gemäss dem Oberbegriff des Anspruchs 4.

Die Erfindung bezweckt in erster Linie die Darbietung grafischer Information derart, dass zumindest die taktile Aufnahme während wählbarer Zeiträume möglich ist. Sie richtet sich vor allem — aber nicht ausschliesslich — darauf, Blinden solche Information zu vermitteln.

Durch die Blindenschrift können Texte jeder Art auch Blinden zugänglich gemacht werden, überwiegend in Form sehr aufwendiger Bücher. Schwierig ist jedoch die Übermittlung von Lesestoff, der weder maschinengeschrieben noch brief- oder buchgebunden ist. Kurztexte wie Nachrichten, Inhaltsangaben usw. erreichen den Blinden im allgemeinen nur als Hörinformation.

Es gibt zwar in jüngerer Zeit Geräte, mit denen sich jeweils eine Zeile setzen lässt, die dann zum Lesen abgetastet werden kann. Ein Beispiel beschreibt die DE-A-3 033 078 mit einer Lochtrommel, durch die informationsgemäss elektromagnetisch von innen nach aussen bewegte Stifte je eine Zeile in einer Lesefläche bilden. Solche Geräte sind aber nicht nur recht teuer, sondern auch zum fortlaufenden Lesen — wie es von Sehenden fast ausschliesslich praktiziert wird — kaum oder nicht geeignet.

Das erfindungsgemässe Verfahren geht im Oberbegriff des Anspruchs 1 aus von einer Möglichkeit zur Darstellung einer Zeile von Blindenschrift-Buchstaben, wie in dem Artikel «Ball and belt loop braille line display» von E.G. Nassimbene im IBM Technical Disclosure Bulletin Vol. 18 No. 7, December 1975, beschrieben. Die Vorrichtung hat eine Magnetplatte, über die ein motorisch angetriebenes, perforiertes Endlosband geführt ist, das über zwei beiderends der Vorrichtung angeordnete Walzen läuft. Nahe der einen Walze befinden sich Elektromagnete, mit denen kleine Stahlkugeln, die von dem unteren Trum des Bandes herangeführt werden, unter elektronischer Steuerung hoch- und in die Perforationen des oberen Trums mustergemäss eingezogen werden. Das Endlosband nimmt die gesetzten Kugeln mit, die von der Magnetplatte am Herausfallen gehindert werden. Sobald das Band am anderen Ende der Magnetplatte ankommt, fallen die Kugeln durch einen Schacht wieder auf das untere Trum. Diese Vorrichtung vermag nur jeweils eine Zeile darzustellen; hierfür erscheint der Konstruktionsaufwand gross. Die Setzgeschwindigkeit ist mässig, da jede einzelne der benötigten Kugeln magnetisch angehoben werden muss, jedoch nur mit begrenzter Kraft, denn sonst könnten sie die Bandperforation durchsetzen und anschliessend verlorengehen. Auch ist für eine rasche Belegung vorausgesetzt, dass vor jedem Elektromagneten stets eine Kugel lagerichtig ansteht, was selbst dann nicht gewährleistet sein muss, wenn das Gerät mit geeigneter Neigung aufgestellt ist. Schliesslich ist das Lesefeld zwangsläufig auf die zu lesende Zeile begrenzt, so dass der Leser sich nacheinander den Inhalt jeder Zeile merken muss, wenn fortlaufender Text gelesen wird; ein Rückgriff auf schon durchgelaufene Information ist nicht möglich, es sei denn, die betreffenden Inhalte würden erneut gesetzt.

Die erfindungsgemässe Vorrichtung geht im Oberbegriff des Anspruchs 4 aus von einem Lesegerät für Blinde gemäss der US-A-3 736 672. Es hat ebenfalls ein gelochtes Endlosband, das über zwei äussere Walzen läuft. Eine davon ist angetrieben und führt unter dem Lochband noch einen Antriebsriemen, der über eine zweite Walze geführt ist und dazu dienen soll, eine Kugelbelegung im Endlosband abtastbar zu halten, während es über eine Lese-Ebene geht. Zwischen den beiden letztgenannten Walzen ist ein Trichterschaft für die Kugeln vorgesehen, die aus Stahl oder Kunststoff bestehen. Unterhalb des unteren Trums des Endlosbandes, dem Ende des Fallschachtes gegenüber, ist eine mechanische Sperr- und Freigabeeinrichtung für die Kugeln angeordnet, die elektromagnetisch betätigt wird. Die Zufuhr der Kugeln erfolgt ausschliesslich durch Schwerkraft, d.h. sehr langsam, und die optoelektronisch gesteuerte Belegung führt zu grosser Wiedergabe alphanumerischer Zeichen, d.h. keiner Blindenschrift. Vielmehr kann der Blinde lediglich stark vergrösserte Druckbuchstaben des gewöhnlichen Alphabets lesen, die von einer recht aufwendigen Bildabtaster-Einrichtung elektromechanisch auf das Endlosband gesetzt werden und mittels eines Zeilenwählers zeilenweise abrufbar sind. Der jeweils lesbare Stoff ist bei dieser Vorrichtung sogar auf wenige, kurze Wörter beschränkt, so dass die vom Leser für zusammenhängende Texte verlangte Gedächtnisleistung unangemessen gesteigert wird.

Nach dem Stand der Technik gibt es für Blinde weiterhin keine Lesemöglichkeiten z.B. nach Art einer Wandzeitung oder für Kurzmitteilungen, wogegen Zeitungsaushänge, Anschlagtafeln für amtliche Bekanntmachungen usw. in der übrigen Bevölkerung etwas unbeachtet Normales sind.

Es ist ein wichtiges Ziel der Erfindung, hier Abhilfe zu schaffen und auch den Blinden Zugang zu solchen an sich flüchtigen, meist nicht vervielfältigten grafischen Informationen bzw. Texten zu ermöglichen. Angesichts der nicht selten kritischen sozialen Lage blinder Mitbürger müssen die benötigten Hilfsmittel einfach und für sie erschwinglich sein.

Der Grundgedanke des erfindungsgemässen Verfahrens ist im kennzeichnenden Teil von Anspruch 1 angegeben; Ausgestaltungen sind Gegenstand der Ansprüche 2 und 3. Die Hauptmerkmale der Vorrichtung sind in Anspruch 4 zusammengefasst; Weiterbildungen sind in den Ansprüchen 5 bis 15 aufgeführt.

Zunächst werden nach der Erfindung in an sich bekannter Weise alle benötigten Zeichenfolgen an einem Schreibort auf einem Träger gesetzt, der anschliessend an einen Leseort befördert wird. Statt der herkömmlichen Technik, die Punkte jedes Zeichens der Blindenschrift bei einzeln gesetzten Wörtern oder Zeilen jeweils durch hochgeschobene Stifte darzustellen, benutzt die Erfindung kleine Kugeln, die mustergemäss so gesetzt werden, dass sie aus dem Träger teilweise herausragen; dieser Vorgang geht sehr schnell und betriebssicher vor sich. Anschliessend wird der solcherart musterbesetzte Kugelträger auf eine Lese-Ebene verbracht, wo dieses Kugelmuster unmittelbar abgetastet werden kann. Das in den Ansprüchen 1 bis 3 gekennzeichnete Verfahren gewährleistet also, dass grössere, zusammenhängende Texte sehr rasch und rationell gesetzt werden, worauf sie am Leseort beliebig lange zur Verfügung stehen. Ist eine Textseite z.B. aus 24 Zeilen mit 20 Zeichen pro Zeile in Blindenschrift (jeweils mit bis zu 6 Punkten) gesetzt, so werden hierfür maximal 2880 Kugeln auf die Lesefläche gebracht und dort verfügbar gehalten. Dank des besonderen Verfahrens, zuerst alle Löcher des Trägers zu besetzen und daraus die nicht benötigten Kugeln elektromagnetisch abzusaugen, geht der Setzvorgang binnen nur 1 Sekunde fast geräuschlos und vibrationsfrei vor sich.

Die benutzten Zeichen können Standardgrösse haben, z.B. mit einem Abstand der einzelnen Punkte im Zeichen von 2,5 mm, und die Zahl der Zeichen pro Zeile sowie die Anzahl der Zeilen kann in Grenzen frei gewählt werden. Bei Verwendung von Kugeln mit einem Durchmesser $d \leq 1,6$ mm können die gesetzten Punkte der Zeichen beispielsweise ca. 0,5 mm über der Lese-Ebene erhaben sein. Die oben gerundeten Zeichen werden selbst bei aufliegenden Fingern dargestellt; selbst durch übermässigen Druck können sie nicht zum Verschwinden gebracht werden, wie auch eine Beschädigung der Hilfsmittel nicht möglich ist. Die Lese-Ebene kann horizontal oder z.B. bis zu etwa 30° zum Benutzer geneigt sein.

Die in den Ansprüchen 4 bis 15 gekennzeichnete Vorrichtung hat einen konstruktiv klaren Aufbau, obwohl für die Wiedergabe voller Textseiten eine Vielzahl von Kugeln benötigt wird, die jedoch in kürzester Zeit mustergemäss gesetzt werden. Hierfür sind eine Kugel-Abzieheinrichtung und eine elektronische Steuerung vorgesehen, namentlich mit einem Mikroprozessor. Der zu setzende Text wird in Perforationen, Vertiefungen oder dgl. eines Trägers gebildet, indem sämtliche Perforationen, Vertiefungen oder dgl. in einer Zuführstation mit Kugeln belegt und diejenigen Kugeln, welche man für die jeweiligen Zeichenfolgen nicht braucht, entfernt werden. Da nun die Punktschrift aus einer gleichförmigen Matrix z.B. in einem 2,5 mm × 2,5 mm Punktraster gebildet wird, werden beliebige grafische Informationen wie mathematische Kurven, Landkarten, Schwarzschrift oder dgl. einschliesslich Klartext darstellbar. Wenn zur Veränderung der dargestellten Information ein Neuschreiben der ganzen Seite erforderlich ist, dauert der Vorgang nur etwa 1 s (rechnerisch bei 24 Zeilen: 700 ms). Während dieser Zeit ist die Information nicht lesbar, doch steht sie anschliessend unbegrenzt zur Verfügung, auch bei Stromabschaltung.

Bevorzugt erfolgt die selektive Kugelbelegung durch Magnetkraft. Aus Sortierfächern, Fallschächten oder dgl. werden magnetisierbare Kugeln unter Füllmagnet-Einwirkung in die Zuführstation gebracht. Diese besteht aus unbeweglichen Teilen und ist an der Rahmen-Unterseite angeordnet. Über ihr befindet sich die Absaugstation, mit der die zu entfernenden Kugeln unter elektronischer Steuerung elektromagnetisch abgesaugt werden können. Die Erfindung sieht ferner vor, dass der musterbesetzte Träger, beispielsweise eine Deckbahn, nur für den Setzvorgang sowie zum Einlauf in den Lese-Bereich bewegt wird, und zwar in zeitlicher Abstimmung mit der Betätigung der Elektromagnete. Gegebenenfalls ist eine Spanneinrichtung für die Deckbahn vorhanden, die von einer flexibel anliegenden dünnen Folie überzogen sein kann, durch die hindurch die Kugelkuppen tastbar sind. Deckbahn und Folie können ein Endlosband bilden.

Einzelheiten des Antriebes für die Deckbahn bzw. das Endlosband sind Gegenstand der Ansprüche 6 bis 8. Bevorzugte Anordnungen und Ausführungsformen der Kugel-Zuführeinrichtung sind in den Ansprüchen 9 und 10 angegeben. Aufbau und Steuerung der Kugel-Abzieheinrichtung sind in den Ansprüchen 11 bis 15 näher gekennzeichnet.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:

Fig. 1 eine schematisierte Seitenansicht, teilweise im Schnitt, einer Vorrichtung nach der Erfindung,

Fig. 2 eine Draufsicht auf einen Teil einer Deckbahn der Vorrichtung von Fig. 1,

Fig. 3 eine Teilansicht, teilweise im Schnitt, einer Walze der Vorrichtung von Fig. 1,

Fig. 4a und 4b je eine Schnittansicht entsprechend den Linien IVa-IVa bzw. IVb-IVb in Fig. 3,

Fig. 5 eine vergrösserte Teilansicht des mit V gezeichneten Bereichs von Fig. 4a,

Fig. 6 eine vergrösserte Seitenansicht, teilweise im Schnitt, einer Kugel-Absaugeinrichtung der Vorrichtung von Fig. 1 und

Fig.7 eine Draufsicht auf eine Lochplatte der Einrichtung von Fig. 6.

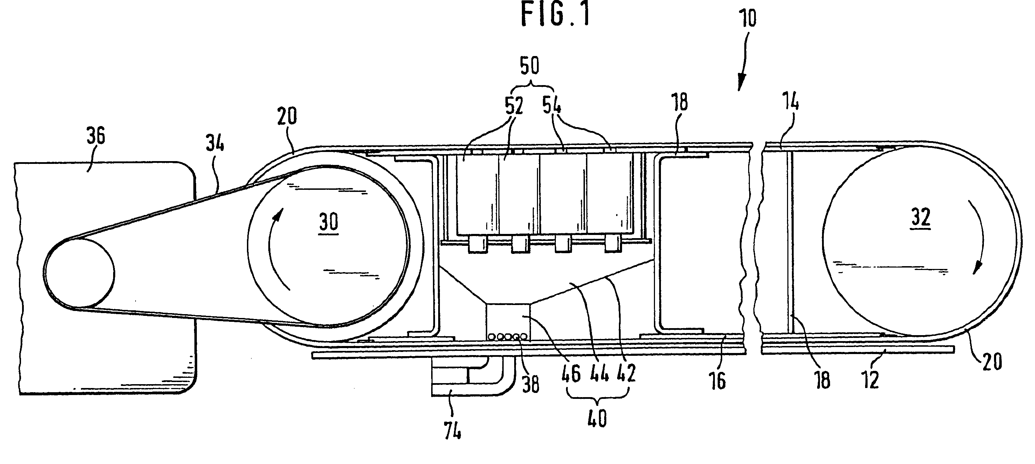

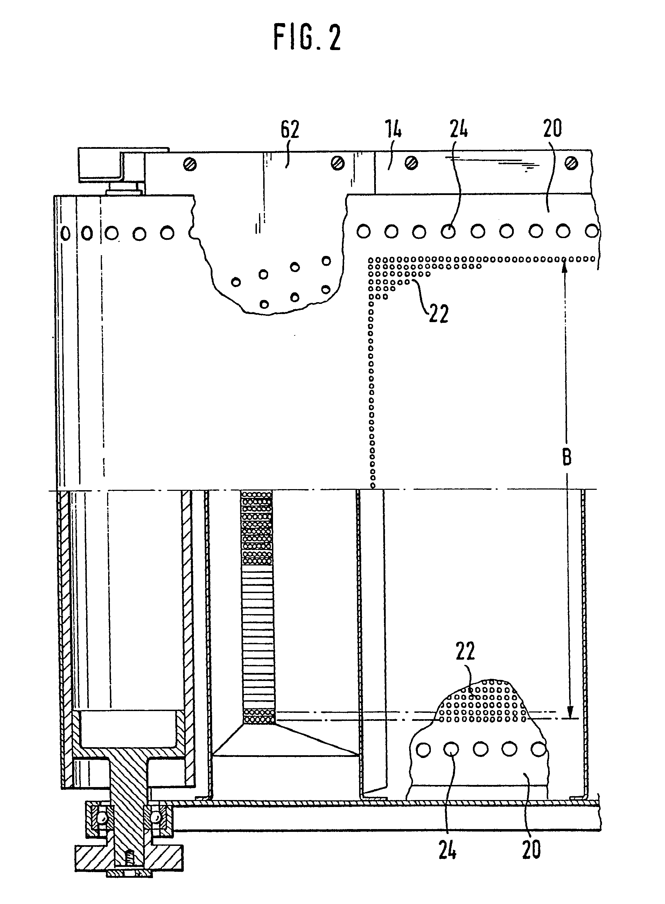

Das insgesamt mit 10 bezeichnete Gerät nach der Erfindung ist in Fig. 1 (verkürzt) etwa in natürlicher Grösse dargestellt. Es hat einen Rahmen 12 mit einer oberen Platte 14 und einer unteren Platte 16. Dazwischen sind Stege 18 zur Versteifung vorgesehen. Auf der oberen Platte 14 liegt eine Deckbahn 20 auf, die beispielsweise zwei Felder mit parallelen Perforationen 22 haben kann (Fig. 2). Sie ist ein Transportband oder -riemen aus zäh-flexiblem, nichtreckendem Material wie Leder, Kunststoff oder dgl. und vorzugsweise von einer dünnen Folie 70 abgedeckt oder abdeckbar, zumindest im Bereich der Perforationsfelder.

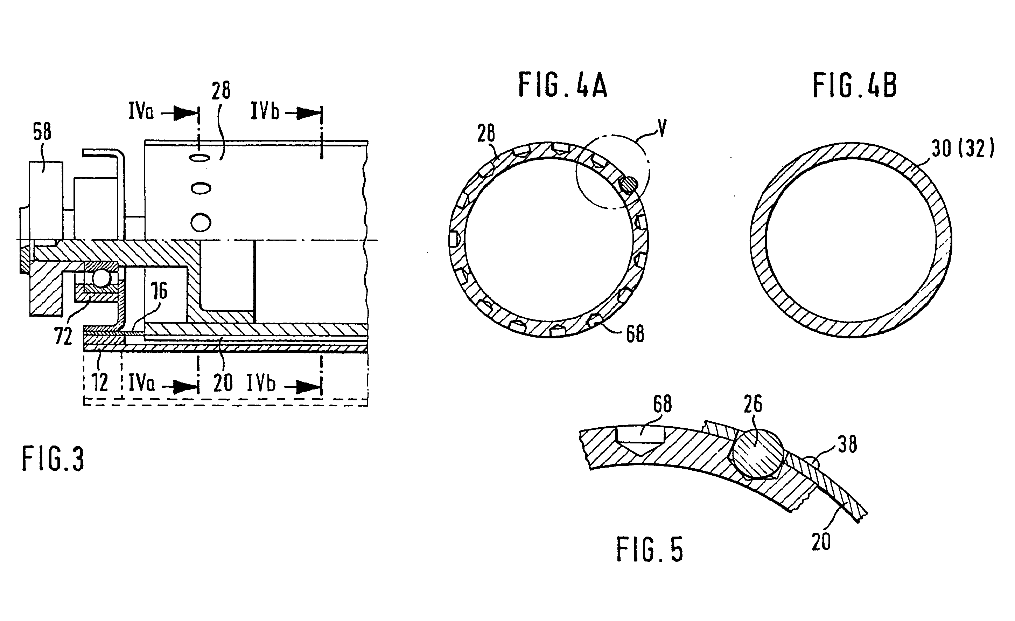

An beiden Rändern hat die Deckbahn 20 Mitnahme-Löcher 24, in die Umfangs-Vorsprünge (Zakken) 26 von Mitnahmerädern 28 passen, die an zwei Walzen 30, 32 angebracht oder mit diesen einstückig sind (Fig. 3 bis 5). Wie aus Fig. 1 ersichtlich ist, kann eine dieser beiden Walzen, z.B. 30, über einen Riementrieb 34 von einem Elektromotor 36 angetrieben werden, der ein Schrittmotor sein kann. Bedarfsweise ist es auch möglich, die bzw. jede Walze 30, 32 mittels eines Handrades 58 zu drehen (Fig. 3).

Die Schnittansicht in Fig. 4a veranschaulicht, dass der Mitnahmerad-Abschnitt 28 der Walze 30 Radial-Senklöcher 68 haben kann, die zur Aufnahme der Umfangs-Vorsprünge 26 dienen. Im Beispiel der Fig.5 sind hierfür Kugeln vorgesehen, doch eignen sich auch zylindrische, konische und andere Vorsprünge 26. Zur Lagerung der Walzen 30, 32 dienen beiderseits auf dem Rahmen 12 angebrachte Lager 72 (Fig. 3).

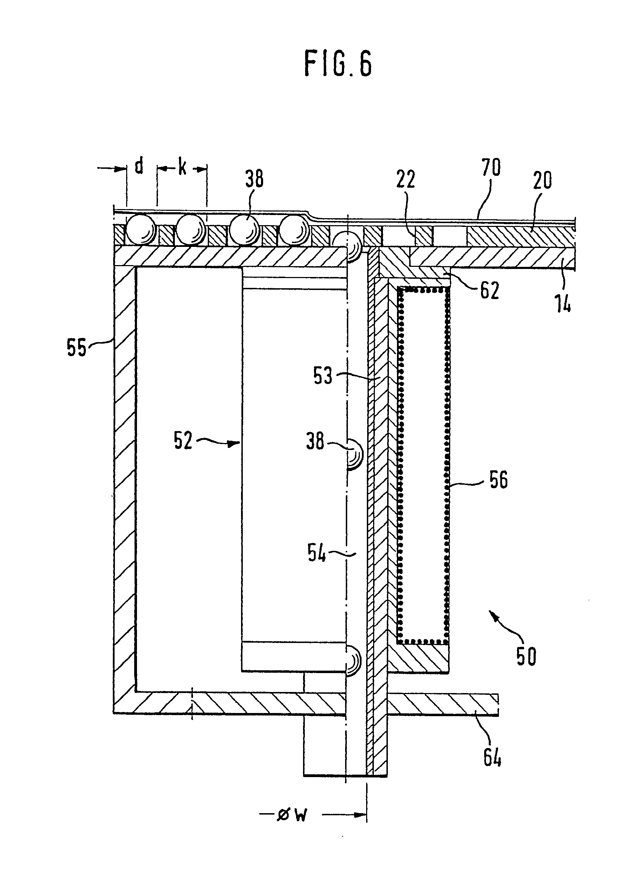

Wie insbesondere Fig. 2 und 3 erkennen lassen, weist die als Endlosband ausgebildete Deckbahn 20 beispielsweise zwei Rasterfelder von Bohrungen auf, die zur Aufnahme von magnetisierbaren, nämlich aus magnetisch permeablem Material bestehenden Kugeln 38 dienen (Fig. 5 und 6). Hierfür ist an der Unterseite des Rahmens 12 eine Kugel-Zuführeinrichtung 40 mit einem Trichterschacht 42 vorgesehen, der einen Vorratsraum 44 aufweist. Darunter können sich (nur schematisch angedeutete) Sortierfächer 46 befinden. Unter der Einwirkung eines Permanent-Füllmagneten 74 gelangen die Kugeln 38 in die Perforationen 22 der unten an der Platte 16 dicht anliegend vorbeigeführten Deckbahn 20.

Wenn die Perforationen 22 bzw. Vertiefungen in der Deckbahn 20 beispielsweise einen Durchmesser von 1,7 mm haben, ist die Verwendung von Stahlkugeln mit einem Durchmesser d von höchstens 1,6 mm vorgesehen. Die lichte Weite w der Spulen-Durchgangslöcher 54 ist in diesem Falle zweckmässig auf 2 mm bemessen. Hat die Deckbahn 20 eine Dicke (Wandstärke) von 1 mm, so ragen die Kugelkuppen um 0,6 mm daraus hervor. Das Herausfallen der Kugeln verhindert die um die Deckbahn 20 gelegte dünne Folie 70 (Fig. 6), durch die hindurch die Kugelkuppen tastbar sind.

Das von der Walze 30 mit einem kräftigen Antrieb sehr rasch weiterbewegte Endlosband kommt sodann zu einer über der Zuführeinrichtung 40 befindlichen Kugel-Abzieheinrichtung 50 (Fig. 1 und 6). Diese hat eine obere Lochplatte 62, unter der sich Elektromagnete 52 befinden. Die Spulenkörper der Elektromagnete 52 tragen Wicklungen 56 (Fig. 6). Die aus magnetisch durchlässigem Material, z.B. Eisen, bestehenden Spulenkerne 53 haben eine dünne unmagnetische Rohrauskleidung, z.B. aus Messing, mit axialen Durchgangslöchern 54 für die Kugeln 38.

Der Riementrieb 34 wird bereits in Bewegung gesetzt, während ein gelochter Teil der Deckbahn 20 über der Abzieheinrichtung 50 steht. Kugeln 38 kommen dorthin erst, wenn die volle Riemengeschwindigkeit von z.B. 500 mm/s erreicht ist. Für den Weg einer Kugel 38 über ein Loch 54 hinweg stehen nur ca. 3 ms zur Verfügung; in dieser kurzen Zeit beträgt der Fallweg unter Erdbeschleunigung rund 50 μm, er ist mithin praktisch vernachlässigbar.

Wird jedoch im Moment des Ankommens der betreffenden Kugel der dem Loch zugeordnete Elektromagnet 52 durch Erregen seiner Wicklung 56 betätigt, so wird diese Kugel 38 mit einer Arbeitsbeschleunigung von etwa 500- bis 1000facher Erdbeschleunigung nach unten abgesaugt. Die abgezogene Kugel 38 passiert das Durchgangsloch 54 — ohne dass ein «Kleben» an magnetischem Material stattfände — mit grosser Geschwindigkeit, um in den Trichterschacht 42 bzw. in den Vorratsraum 44 zu fallen (Fig. 1). Ein magnetischer Rückschluss 55 (Fig. 6) vom unteren Ende der Spulenkerne 53 zu der oberen Rahmenplatte 14 verhindert, dass die austretenden Kugeln 38 magnetisch gebremst werden, die wieder zur Zuführeinrichtung 40 gelangen.

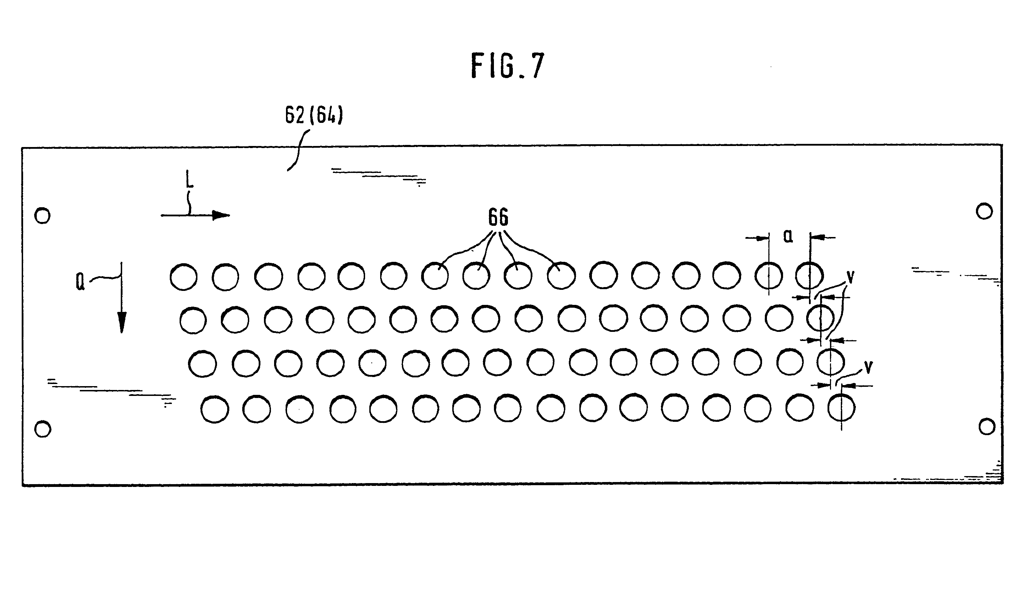

Die obere Lochplatte 62 und eine untere Lochplatte 64 dienen zur Halterung der Elektromagneten 52 (Fig. 7). Bohrungen 66, welche die oberen und unteren Enden der Elektromagnete 52 aufnehmen, sind mit Abständen a in Richtung L in mehreren parallelen Reihen angeordnet. Dabei ist jede Reihe gegen die benachbarte Lochreihe um ein Versetzungsmass v versetzt, das zweckmässig gleich dem durch die Anzahl der Lochreihen geteilten Kugelabstand k in der Deckbahn 20 ist.

Damit während der zweiten Hälfte des Fallwegs im unteren Teil eines jeden Elektromagneten 52 keine Gegenkräfte auftreten, werden die Magnete bevorzugt unter Steuerung durch einen (nicht gezeichneten) Mikroprozessor — erfindungsgemäss nur während eines Teils der Periode T betätigt, die zum Befördern der Deckbahn 20 in Richtung L über einen Kugelabstand k benötigt wird.

Es genügt, die einzelnen Elektromagnete 52 während etwa T/4 zu erregen, wenn (wie gezeigt) vier jeweils um k/4 versetzte Lochreihen vorhanden sind. Dabei werden zunächst die in Richtung Q benachbarten Elektromagnete aufeinanderfolgend betätigt. Gleichzeitig mit der Weiterbeförderung der Deckbahn 20 um einen Viertel-Kugelabstand k/4 erfolgt das Weiterschalten des Erregerstroms an die nächste Magnet-Querreihe, beginnend mit der ersten (in Fig. 7 obersten) Lochreihe.

Dank der kurzen Dauer des Absaugvorganges wird die gewünschte Kugelbelegung erheblich beschleunigt. Dadurch ist es möglich, die Steuerung der Elektromagnete 52 nach dem Multiplex-Verfahren programmiert durchzuführen. Dies ergibt verschobene Zeitfenster, so dass ein und dieselbe Steuerelektronik für alle Elektromagnete 52 nacheinander verwendbar ist.

Das Gerät 10 kann über eine (nicht dargestellte) einfache Schnittstelle von einem Computer der unteren Preisklasse mit «Softwaretreiber» angesteuert werden, um beliebige grafische Informationen insbesondere in Blindenschrift (Braille) zu setzen. Diese sind nicht auf reine Texte beschränkt, sondern umfassen bildliche Darstellungen, Tabellen, Diagramme, Pläne oder dgl. Andererseits können Klartexte, Kurven usw. sowohl taktil als auch visuell dargestellt werden.

Der Träger kann auch eine starre Platte sein, die beispielsweise aus Metall, Hartkunststoff oder dgl. gefertigt und mit Löchern 22 bzw. Vertiefungen versehen ist.

Alternativ ist es möglich, statt zylindrischer Perforationen 22 nach innen (unten) sich erweiternde Bohrungen, Vertiefungen oder dgl. vorzusehen, die ein Herausfallen der Kugeln 38 nach aussen verhindern. Unter Umständen kann es hierbei aber zu Klemmwirkungen kommen, welche das Absaugen der Kugeln 38 in der Absaugstation 50 behindern oder verzögern würden.

Die Gehäusemasse hängen von der nutzbaren Lesefläche ab, die ihrerseits grundsätzlich frei wählbar ist und bevorzugt wenigstens eine Textseite umfasst. Die Oberfläche des Gerätes 10 ist um ein Umrahmungsmass grösser als das Lesefeld. Die Höhe des recht flachen Gerätes 10 ist durch die Walzengrösse bestimmt.

Wichtige Vorteile der Erfindung beruhen darauf, dass das Gerät 10 die Belegung des Trägers 20 mit magnetisierbaren Kugeln 38 durch Feldeinwirkung ermöglicht, d.h. ohne bewegte Teile. Die Geschwindigkeit des Trägers 20 bzw. seines Riementriebs 34 während seiner Vorlaufphase in der Zuführstation 40 ist erfindungsgemäss mit der Ansteuerung der Absaugmagnete 52 koordiniert, wodurch eine ausserordentlich schnelle Belegung erzielt wird. Die Bremsung des Antriebes bzw. des Riementriebs 34 beginnt, sobald auch die letzte Lochreihe gesetzt ist; der informationsbesetzte Träger 20 kommt auf dem Lesetableau (obere Platte 14) zum Stillstand, um beliebig lange gelesen werden zu können.

Günstig ist es ferner, dass die Apparatus keine sich verbrauchenden Materialien verwendet. Auch sind keine Teile mit starker Temperaturabhängigkeit vorhanden. Überdies ist der Stromverbrauch niedrig; er beträgt beispielsweise im Mittel nur rund 15 W. Besonders günstig ist, dass keine periodische Wartung benötigt wird, weil dank der einfachen Konstruktion eine störungsfreie Betriebsdauer (MTBF) von im Mittel mehreren Tausend Betriebsstunden erzielt werden kann. Die Herstellung erfordert einen verhältnismässig geringen Arbeits- und Materialaufwand. Soll die Anzahl der dargestellten Zeichen vergrössert werden, so steigert dies die Kosten des Gerätes nur unwesentlich.

**Patentansprüche**

1. Verfahren zum Darstellen von grafischer Information, insbesondere von Blindenschrift-Texten, in Form auswechselbarer, tastbarer Muster von Zeichenfolgen auf einem dauerverwendbaren Träger, wobei an einem ersten Ort (Schreibort) kleine Kugeln mustergemäss so gesetzt werden, dass sie aus Perforationen, Vertiefungen oder dgl. des Trägers teilweise herausragen, worauf der solcherart musterbesetzte Träger an einen zweiten Ort (Leseort), insbesondere auf eine Lese-Ebene verbracht wird, dadurch gekennzeichnet, dass der in dem Träger zu setzende Text gebildet wird, indem sämtliche Perforationen, Vertiefungen oder dgl. mit Kugeln belegt und diejenigen Kugeln, welche man für die jeweiligen Zeichenfolgen nicht benötigt, entfernt werden.

2. Verfahren nach Anspruch 1, dadurch gekennzeichnet, dass die Kugelbelegung durch Magnetkraft erfolgt, indem magnetisierbare Kugeln verwendet und die zur mustergemässen Zeichenbildung zu entfernenden Kugeln unter elektronischer Steuerung ausgewählt und elektromagnetisch abgesaugt werden.

3. Verfahren nach Anspruch 2, dadurch gekennzeichnet, dass die Kugelselektion mit der Bewegung des Trägers synchronisiert wird.

4. Vorrichtung zur Durchführung des Verfahrens nach einem der Ansprüche 1 bis 3, mit einem Rahmen, einer ebenen oberen Platte (14), einem über die obere Platte anliegend hinwegführbaren Träger (20) mit einer Vielzahl von Perforationen (22) oder Vertiefungen, ferner mit einem Antrieb (36) zum Bewegen des Trägers und mit einer Einrichtung (40) zum Zuführen von Kugeln (38) solcher Grösse, dass sie die Perforationen des Trägers teilweise durchragen bzw. aus den Vertiefungen teilweise vorstehen, gekennzeichnet durch eine Einrichtung (50) zum Abziehen der zur mustergemässen Zeichenbildung nicht benötigten Kugeln (38) und durch eine elektronische Steuerung für die Kugel-Abzieheinrichtung (50) und/oder den Antrieb (36), namentlich mit einem Mikroprozessor.

5. Vorrichtung nach Anspruch 4, dadurch gekennzeichnet, dass der Träger (20) ein ebener Körper ist, namentlich eine Platte oder Scheibe mit Perforationen bzw. Vertiefungen.

6. Vorrichtung nach Anspruch 4, wobei der Träger ein über zwei beiderseits des Rahmens (12) angeordnete Walzen (30, 32) und die dazwischen befindliche obere Platte (14) geführter flexibler Körper ist, dadurch gekennzeichnet, dass der Träger eine mit parallelen Reihen von Perforationen (22) bzw. Vertiefungen versehene Deckbahn (20) ist, die zumindest im Bereich der Perforationen (22) bzw. Vertiefungen von einer flexibel anliegenden Folie (70) überzogen ist, durch die hindurch die Kugelkuppen tastbar sind, und dass Deckbahn (20) und Folie (70) ein Endlosband bilden.

7. Vorrichtung nach Anspruch 6, dadurch gekennzeichnet, dass wenigstens eine der Walzen (z.B. 30) nahe ihren Stirnflächen Umfangs-Vorsprünge (26) aufweist, die nach Art eines Zackenrades (28) in zugeordnete Mitnahme-Lochreihen (24) am Rand der Deckbahn (20) eingreifen und bevorzugt von Zapfen, Kugeln oder dgl. gebildet sind, welche in Radial-Senklöchern (68) der betreffenden Walze (30) sitzen, und dass der Antrieb einen beispielsweise mittels eines Riementriebs (34) mit dieser Zackenwalze (30) bewegungsverbundenen Elektromotor (36) aufweist.

8. Vorrichtung nach Anspruch 6 oder 7, dadurch gekennzeichnet, dass eine Deckbahn-Spanneinrichtung (60) vorhanden ist.

9. Vorrichtung nach wenigstens einem der ansprüche 4 bis 8, dadurch gekennzeichnet, dass magnetisierbare Kugeln (38) vorgesehen sind und dass die Kugel-Zuführeinrichtung (40) aus unbeweglichen Bauteilen besteht und an der Unterseite des Rahmens (12) angeordnet ist, vorzugsweise nahe einem darunter befindlichen Füllmagneten (74).

10. Vorrichtung nach Anspruch 9, wobei die Kugel-Zuführeinrichtung (40) gegebenenfalls mit senkrechten oder schrägen Sortierfächern (46), Fallschächten oder dgl. versehen ist, dadurch gekennzeichnet, dass die Kugel-Zuführeinrichtung (40) unmittelbar unterhalb der Kugel-Abzieheinrichtung (50) angeordnet ist und einen sich über die nutzbare Breite (B) des Trägers (20) erstreckenden Trichterschacht (42) neben der unteren Platte (16) des Rahmens (12) aufweist.

11. Vorrichtung nach wenigstens einem der Ansprüche 4 bis 10, dadurch gekennzeichnet, dass die Kugel-Abzieheinrichtung (50) in Reihen angeordnete Elektromagnete (52) aufweist, dass deren Spulenkern (53) jeweils axiale Durchgangslöcher (54) mit einer lichten Weite (w) haben, die den Kugeldurchmesser (d) zumindest knapp überschreitet, und dass die Spulenkerne (53) unten über einen magnetischen Rückschluss (55) mit der oberen Platte (14) verbunden sind.

12. Vorrichtung nach wenigstens einem der Ansprüche 4 bis 11, dadurch gekennzeichnet, dass die Kugel-Abzieheinrichtung (50) zwei übereinander angeordnete Lochplatten (62 bzw. 64) aufweist, die sich im wesentlichen über die nutzbare Breite (B) des Trägers (20) namentlich zwischen dessen Mitnahme-Lochreihen (24) erstrecken und Reihen paralleler Bohrungen (66) haben.

13. Vorrichtung nach Anspruch 11 und 12, dadurch gekennzeichnet, dass die Elektromagnete (52) sowie die ihnen zugeordneten Bohrungen (66) der Lochplatten (62, 64) in zueinander versetzten Reihen angeordnet sind (Fig. 7), wobei in einer Koordinatenrichtung (L) das Versetzungsmass (v) gleich dem Kugelabstand (k) in den Deckbahn-Perforationen (22) ist.

14. Vorrichtung nach einem der Ansprüche 11 bis 13, dadurch gekennzeichnet, dass die Elektromagnete (52) nur während eines Teils der Zeit betätigbar sind, die zum Befördern des Trägers (20) über einen Kugelabstand (k) erforderlich ist, insbesondere nur während etwa eines Viertels dieser Periode (T).

15. Vorrichtung nach einem der Ansprüche 11 bis 14, dadurch gekennzeichnet, dass die Elektromagnete (52) in Multiplex-Verschachtelung betätigbar sind, insbesondere durch gleichzeitig mit der Trägerbeförderung über einen Kugelabstand (k) erfolgtes Weiterschalten jeder Querreihe von Elektromagneten (52).


**Claims**

1. Method for displaying graphic information, in particular braille texts, by way of replaceable symbol sequence patterns to be tactually sensed on a permanently usable support, small balls being set patternwise at a first location (writing place) such that they partly protrude out of perforations, hollows, etc., the support thus bearing the pattern then being taken to a second location (reading place), in particular a reading plane, wherein the text to be set is formed in the support by placing balls onto all perforations, hollows, etc., and removing those balls which are not required for the respective symbol sequences.

2. Method according to claim 1, wherein the placing of the balls is effected by magnetic force in that magnetizable balls are used and the balls to be removed for patternwise sequence setting are selected by electronic control and are sucked off electromagnetically.

3. Method according to claim 2, wherein the ball selection is synchronized with the support motion.

4. Device for carrying out the method according to one of claims 1 to 3, including a frame (12), a plane upper plate (14), a support (20) comprising a plurality of perforations (22) or hollows and adapted to be contiguously moved across the upper plate, further including drive means (36) for moving the support and feed means (40) for feeding balls of such size that they partly pass through the perforations of the support or partly protrude out of the hollows, respectively, characterized by removal means (50) for removing the balls (38) not required for patternwise sequence setting and by an electronic control for the ball removal means (50) and/or for the drive means (36), in particular comprising a microprocessor.

5. Device according to claim 4, wherein the support (20) is a plane body, especially a plate or disk having perforations or hollows, respectively.

6. Device according to claim 4, the support being a flexible body running over two drums (30, 32) arranged at either side of the frame (12) and over the upper plate (14) therebetween, wherein the support is a web (20) provided with parallel rows of perforations (22) or hollows, respectively, that is covered by a flexibly engaging foil (70) at least in the area of said perforations (22) or hollows, through which foil the ball tips can be tactually sensed, and wherein web (20) and foil (70) form an endless belt.

7. Device according to claim 6, wherein at least one of the drums (e.g. 30) includes near its end faces peripheral sprockets (26) enslaving, in the manner of a sprocket wheel, associated engaging holes (24) near the edges of the web (20) and preferably comprising pins, balls or the like seated in radial counterbores (68) of the respective drum (30), and wherein the drive means includes an electric motor (36) connected to said sprocket drum (30), e.g. by a belt drive (34).

8. Device according to claim 6 or claim 7, comprising a web tightener (60).

9. Device according to at least one of claims 4 to 8, wherein magnetizable balls (38) are provided and wherein the ball feed means (40) consists of immovable components and is arranged at the underside of the frame (12), preferably close to a filler magnet (74) therebelow.

10. Device according to claim 9, the ball feed means (40) being optionally provided with vertical or slanting sorter partitions (46), chutes or the like, wherein the ball feed means (40) is immediately below the ball removal means (50) and includes a chute (42) extending across the useful width (B) of the web (20) adjacent the lower plate (16) of the frame (12).

11. Device according to at least one of claims 4 to 10, wherein the ball removal means (50) includes arrays of electromagnets (52) having coil cores (53) with axial passages (54) of a clear width (w) that at least slightly exceeds the ball diameter (d) and wherein the bottoms of the coil cores (53) are connected to the upper plate (14) by magnetic flux backpath means (55).

12. Device according to at least one of claims 4 to 11, wherein the ball removal means (50) comprises two apertured plates (62, 64) above one another which substantially extend across the useful width (B) of the support (20), especially between the engaging hole rows (24) of the latter, and which have rows of parallel bores (66).

13. Device according to claims 11 and 12, wherein the electromagnets (52) and the bores (66) of the apertured plates (62, 64) associated thereto are set off in a staggered array (Fig. 7), the offset dimension (v) in one coordinate direction (L) equalling the ball spacing (k) in the perforations (22) of the support (20).

14. Device according to one of the claims 11 to 13, wherein the electromagnets (52) are actuable only during part of that time period which is required for moving the support (20) across one ball spacing path (k), in particular during only about one quarter of said time period (T).

15. Device according to any one of claims 11 to 14, wherein the electromagnets (52) are actuable in accordance with an interleaving time-multiplex schedule, in particular by successive actuation of all transverse rows of electromagnets (52) simultaneously with the respective support motion across one ball spacing (k).

**Revendications**

1. Procédé pour la représentation d'informations graphiques, en particulier de textes en braille, sous forme de structures échangeables et palpables de suites de caractères sur un support à utilisation permanente, des billes étant composées dans un premier emplacement (emplacement d'écriture) en conformité à la structure de départ et de façon à déborder en partie des perforations, creux etc. du support, le support de la sorte occupé par la structure étant par la suite transporté vers un deuxième emplacement (emplacement de lecture), en particulier sur un plan de lecture, caractérisé en ce que le texte à composer dans le support est formé en occupant toutes les perforations, les creux etc. par les billes, et en extrayant les billes non nécessitées pour les chaînes de caractères respectives.

2. Procédé en conformité à la revendication 1, caractérisé en ce que l'occupation des billes s'effectue par la force magnétique, en employant des billes magnétisables et en sélectionnant et en extrayant par électromagnétisme, sous commande électronique, les billes à etraire en vue de former les caractères correspondant à la structure d'origine.

3. Procédé en conformité à la revendication 2, caractérisé en ce que la sélection des billes est synchronisée avec le déplacement du support.

4. Dispositif pour la réalisatoin du procédé en conformité à une des revendications de 1 à 3, présentant un cadre (12), une plaque supérieure plane (14), un support (20) déplaçable et adhérant à la plaque supérieure, muni d'un grand nombre de perforations (22) ou de creux; présentant en outre un entraînement (36) pour le déplacement du support et un dispositif (40) pour l'adduction de billes (38) tellement dimensionnées qu'elles débordent en partie des perforatons du support, resp. qu'elles font en partie saillie sur les creux, caractérisé par un dispositif (50) pour le soutirage des billes non nécessitées pour la formation des caractères correspondant à la structure (38) et par une commande électronique pour le dispositif de soutirage des billes (50) et/ou pour l'actionnement (36), en particulier par un microprocesseur.

5. Dispositif suivant la revendication 4, caractérisé en ce que le support (20) est un corps plat, en particulier une plaque ou un disque avec des perforations resp. des creux.

6. Dispositif suivant la revendication 4, le support étant un corps flexible conduit sur deux rouleaux (30, 32) dosposés des deux côtés du cadre (12) et sur la plaque supérieure (14) se trouvant entre les rouleaux, caractérisé en ce que le support est une bande de couverture (20) munie de rangées parallèles de perforations (22) resp. de creux, laquelle bande est revêtue d'une feuille adhérante et flexible (70), présente au moins dans la zone des perforations (22) resp. des creux, et à travers laquelle les calottes des billes sont palpables, et en ce que la bande de couverture (20) et la feuille (70) forment un ruban sans fin.

7. Dispositif suivant la revendication 6, caractérisé en ce que au moins un des rouleaux (p.ex. 30) présente en proximité de ses faces des saillies circonférencielles (26) qui, à la manière d'une roue dentée (28), font prise sur des rangées de trous d'entraînement (24) correspondants et se trouvant sur le bord de la bande de couverture (20), les saillies étant formées de préférence par des pointes, des sphères etc. se trouvant dans des trous radiaux (68) du rouleau correspondant (30), et en ce que l'entraînement présente un moteur électrique (36) dont le mouvement est solidaire à ce rouleau denté (30), la solidarité étant assurée par exemple au moyen d'une commande à courroie (34).

8. Dispositif en conformité à la revendication 6 ou 7, caractérisé en ce qu'un dispositif tendeur (60) est présent pour la bande de couverture.

9. Dispositif suivant au moins une des revendications 4 à 8, caractérisé en ce que des billes magnétisables (38) sont prévues et que le dispositif d'adduction des billes (40) est composé de parties constructives immobiles et qu'il se trouve sur la face inférieure du cadre (12), de préférence près d'un aimant de remplissage se trouvant au-dessous.

10. Dispositif suivant la revendication 9, le dispositif d'adduction des billes (40) étant muni, le cas échéant, de compartiments de triage, d'entonnoirs d'introduction etc. verticaux ou obliques (46), caractérisé en ce que le dispositif d'adduction des billes (40) est disposé immédiatement au-dessous du dispositif de soutirage des billes (50), présentant à côté de la plaque inférieure (16) du cadre (12) un entonnoir d'introduction (42) occupant toute la largeur utile (B) du support (20).

11. Dispositif suivant au moins une des revendications 4 à 10, caractérisé en ce que le dispositif de soutirage des billes (50) présente des électroaimants disposés en rangées; que les noyaux de leurs bobines (53) présentent chacun des trous de passage axiaux (54) avec un diamètre intérieur (w) dépassant en partie au moins minime le diamètre des billes (d), et en ce que les noyaux des bobines (53) présentent sur leur extrémité inférieure et en liaison avec la plaque supérieure (14) un composant pour accomplir la refermeture du circuit magnétique (55).

12. Dispositif suivant au moins une des revendications 4 à 11, caractérisé en ce que le dispositif de soutirage des billes (50) présente deux plaques perforées (62 resp. 64) disposées l'une au-dessus de l'autre, occupant essentiellement la largeur utile (B) du support (20), particulièrement entre ses rangées de trous d'entraînement (24), et qui sont munies de rangées de perçages parallèles (66).

13. Dispositif suivant la revendication 11 et 12, caractérisé en ce que les électro-aimants (52) et les perçages leur correspondant (66) sur les plaques perforées (62, 64) sont disposés en rangées décalées entre elles (fig. 7), étant dans l'une des directions des coordonnées (L) la cote de décalage (v) égale à la distance entre les billes (k) dans les perforations (22) de la bande de couverture.

14. Dispositif suivant l'une des revendications de 11 à 13, caractérisé en ce que les électro-aimants (52) sont actionnables seulement pendant une partie du temps nécessaire pour transporter le support (20) sur une mesure correspondant à une distance entre les billes (k), en particulier seulement pendant environ un quart de cette période (T).

15. Dispositif suivant l'une des revendications de 11 à 14, caractérisé en ce que les électro-aimants (52) sont actionnables en imbrication multiplex, en particulier par une commutation successive de chacune des rangées d'électro-aimants (52) en synchronisation avec la manutention du support sur un parcours correspondant à la distance entre les billes (k).

FIG.1

# FIG. 2

11

FIG.3

FIG.4A

FIG.4B

FIG.5

# FIG.6

FIG.7

62(64)

66